# EUROPÄISCHE PATENTSCHRIFT

(11) **EP 0 820 942 B1**
(45) Veröffentlichungstag und Bekanntmachung des Hinweises auf die Patenterteilung: **24.05.2000**
(21) Anmeldenummer: 97111825.2
(22) Anmeldetag: 11.07.1997
(51) Int. Cl.: B65G 17/08

(54) **Transportkette**
Conveyor chain
Chaîne transporteuse

(30) Priorität: 23.07.1996 DE 29612735 U
(43) Veröffentlichungstag der Anmeldung: 28.01.1998
(73) Patentinhaber: Wolf-Montage-Automationsanlagen + Sondermaschinen GmbH, 97264 Helmstadt (DE)
(72) Erfinder: Reichert, Gerhard, Dipl.-Ing., 97828 Marktheidenfeld (DE); Nolte, Jörg, Dipl.-Ing., 97828 Marktheidenfeld (DE)
(74) Vertreter: Stracke, Alexander, Dipl.-Ing.

(56) Entgegenhaltungen:
- EP-A- 0 083 119
- EP-A- 0 323 819
- FR-A- 2 399 962
- GB-A- 2 107 020

## Beschreibung

Die Erfindung betrifft eine Transportkette für eine Förderanlage, bei der jedes aus einem Kunststoff gefertigte Kettenglied eine das Fördergut tragende Platte, ein mit einer zylindrischen Bohrung versehenes Kopfteil und einen davon sich erstreckenden, gabelförmigen Abschnitt mit zwei Schenkeln aufweist, bei der zur kardangelenkigen Koppelung von zwei Kettengliedern ein in die zylindrische Bohrung des Kopfteils drehbar eingesetzter Bolzen mit einer Querbohrung und die Schenkel des in Laufrichtung davorliegenden Kettengliedes mit dazu fluchtenden Bohrungen versehen sind, und daß in die Querbohrung und in die Bohrungen der Schenkel ein metallischer Verbindungsstift eingesetzt ist.

Eine derartige Transportkette ist aus der DE 32 35 224 C2 bekannt. Im Einbauzustand liegen die das Fördergut tragenden Platten oben. An der in Transportrichtung vorn und hinten liegenden Querkanten sind sie verzahnt, wobei die Zähne im Versatz zueinander stehen, so daß die Zähne der hinteren Querkante in die Zahnlücken der vorderen Querkante des nachfolgenden Kettengliedes eingreifen. Der Vorteil derartiger Transportketten liegt darin, daß sie sowohl in einer horizontalen Ebene als auch um eine horizontale Achse umgelenkt werden können. Die Umlenkung in einer horizontalen Ebene ermöglicht der in die Bohrung des Kopfteils eingesetzte Bolzen. Die Umlenkung um eine horizontale Achse ermöglicht der die Kettenglieder koppelnde Verbindungsstift.

Bei den in Rede stehenden Transportketten bilden die Platten mit dem Kopfteil und dem gabelförmigen Abschnitt ein einstückiges Formteil, welches aus Kunststoff gefertigt ist. Dies führt aufgrund der Elastizität zu einer relativ starken Dehnung der Transportkette. Diese Dehnung verursacht ein ungünstiges Dynamikverhalten, so daß es zu einem unruhigen Lauf kommt, der in der Branche als sogenannter Stick-Slip-Effekt bezeichnet wird. Darüberhinaus kommt es zu einer nicht genau definierbaren Antriebssituation. Der unruhige Lauf wirkt sich auf die Lage des Fördergutes und damit auf die Funktionssicherheit der Förderanlage negativ aus. Der Antrieb der Transportkette erfolgt üblicherweise durch Kettenräder, über die die Transportkette geführt wird. Diese Kettenräder greifen an den Verbindungsstift an. Es entstehen durch die nicht verdrehbare Lagerung ungünstige Eingriffsverhältnisse, so daß es zu einem erhöhten Verschleiß des Kettenrades und der Transportkette kommt. Dadurch wird die Betriebssicherheit und die Lebensdauer der Transportkette herabgesetzt.

Der Erfindung liegt die Aufgabe zugrunde, eine Transportkette der eingangs näher beschriebenen Art in konstruktiv einfacher Weise so auszubilden, daß die Dehnung gegenüber den bekannten Ausführungen verringert, die Lebensdauer verlängert und während dieser Zeit eine möglichst gleichbleibende, definierte Antriebssituation gewährleistet wird.

Die gestellte Aufgabe wird gelöst, indem der in die Bohrung des Kopfteils eingesetzte Bolzen eine Aussparung aufweist, in der eine auf dem Verbindungsstift drehbar gelagerte, mit den Zähnen eines Antriebesrades in Eingriff stehende, aus einem Werkstoff mit gegenüber dem Kunststoff des Kopfteils höherer Festigkeit gefertigte Rolle liegt, und/oder daß den einander zugewandten Seiten der Schenkel des gabelförmigen Abschnittes eine Verstärkungseinlage angeordnet ist.

Durch die auf dem Verbindungsstift drehbar gelagerte Metallhülse wird eine Antriebssituation geschaffen, die mit der von Stahlrollenketten vergleichbar ist. Dadurch wird insbesondere die Reibung vermindert, so daß die Lebensdauer des Antriebsrades und der Kettenglieder erhöht wird. Je nach Verwendungszweck kann jedoch auch auf die Rolle verzichtet werden und die Transportkette mit den Verstärkungseinlagen ausgerüstet werden. Auch die Kombination der Rolle mit der Verstärkungseinlage ist vorteilhaft. Durch diese Verstärkungseinlage wird die Steifigkeit der Kette erhöht. Sie wird bei der Montage der Transportkette durch den Verbindungsstift in den Schenkeln des jeweiligen Kettengliedes fixiert. Durch die erfindungsgemäße Gestaltung der Transportkette werden insbesondere bei der Kombination der Rolle mit der Verstärkungseinlage die angreifenden Zugkräfte von hochbelastbaren Teilen, wie der Rolle, dem Verbindungsstift und der Verstärkungseinlage aufgenommen. Die relativ geringen Führungskräfte und die Aufnahme der Last werden durch die Kunststoffteile abgetragen. Trotz dieser vorteilhaften Ausgestaltung bleibt die kardanische Beweglichkeit der Kette voll erhalten.

Gemäß einer Ausführungsform ist vorgesehen, daß die Verstärkungseinlage aus einem V-förmigen, der Kontur der Innenfläche der Schenkel des gabelförmigen Abschnittes entsprechend geformten Verstärkungsband besteht, welches vorzugsweise aus Metall gefertigt ist, und welches mit Bohrungen zur Fixierung mittels des Verbindungsstiftes versehen ist. Die Bohrungen liegen in den freien Endbereichen der beiden Stege der Verstärkungseinlage. Zur weiteren Fixierung umgreift das Verstärkungsband den zylindrischen Bolzen, so daß dieser Bereich des Verstärkungsbandes in einem Bogen verläuft. Durch das Verstärkungsband werden in Verbindung mit der vorzugsweise aus Stahl gefertigten Rolle und dem Verbindungsstift die Kräfte durch extrem hoch belastbare Bauteile übertragen. Gemäß einem weiteren Lösungsvorschlag ist vorgesehen, daß das Verstärkungsband aus einem faserverstärkten, beispielsweise einem kohlefaserverstärkten Kunststoff besteht. Derartige Werkstoffe haben eine geringe Dehnung. Darüberhinaus ist das Gewicht relativ gering. Die Verstärkungseinlage kann jedoch auch aus Metall, vorzugsweise aus Stahl, gefertigt werden. Gleiches gilt auch für die Rolle. Metallische Werkstoffe bieten eine hinreichende Festigkeit und lassen sich außerdem sehr gut bearbeiten. Gemäß einem weiteren Vorschlag ist vorgesehen, daß die Rolle aus einem Sintermetall hergestellt wird. Dadurch ergeben sich aufgrund der selbstschmierenden Eigenschaften sehr gute Notlaufbedingungen.

Anhand der beiliegenden Zeichnungen wird die Erfindung noch näher erläutert.

Es zeigen:
- Figur 1: ein Kettenglied als Einzelteil der erfindungsgemäßen Transportkette in einer Unteransicht,
- Figur 2: mehrere miteinander gekoppelte Kettenglieder gemäß der Figur 1, ebenfalls in einer Unteransicht und
- Figur 3: die Kettenglieder gemäß der Figur 2 in einer Draufsicht.

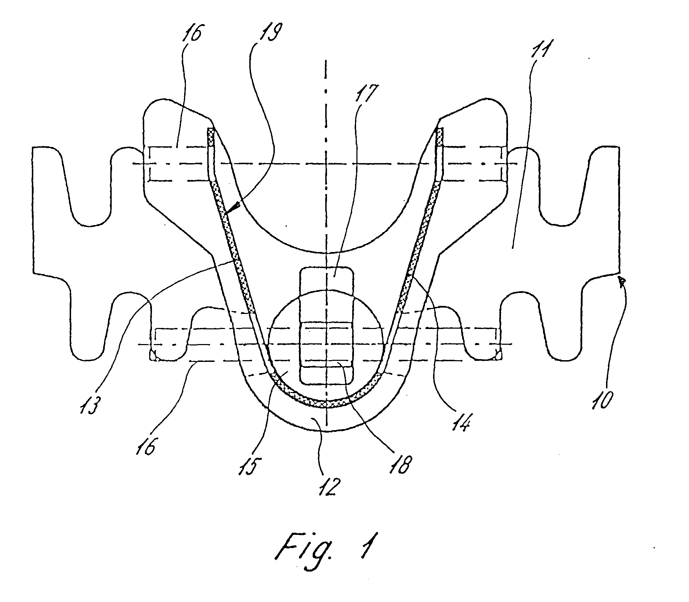

Das in der Fig. 1 dargestellte Kettenglied 10 besteht aus einer Platte 11, auf der das nicht dargestellte Fördergut aufliegt, einem an der unteren, dem Fördergut abgewandten Seite angeordneten Kopfteil 12 und zwei vom Kopfteil 12 erstreckenden Schenkel 13, 14, deren gegenseitige Abstände mit größerer Entfernung vom Kopfteil 12 größer werden. Das Kopfteil 12 liegt, in Transportrichtung der Transportkette gesehen, jeweils vorn beim Kettenglied. Das Kopfteil 12 ist mit einer zylindrischen, quer zur Ebene der Platte 11 stehenden Bohrung versehen, in die ein zylindrischer Bolzen 15 drehfähig eingesetzt ist. Dieser Bolzen 15 ist mit einer Querbohrung versehen, in die ein Verbindungsstift 16 aus Stahl drehbar eingesetzt ist. Dadurch wird die Verbindung mit dem in Transportrichtung davorliegenden Kettenglied 10 geschaffen. Dazu sind die beiden Schenkel 13, 14 des gabelförmigen Abschnittes des Kettengliedes 10 ebenfalls mit zwei fluchtend zur Querbohrung des Bolzens 15 stehenden Bohrungen versehen, durch die der Verbindungsstift 16 geführt ist. Auch in dem dem Kopfteil 12 gegenüberliegenden Bereich sind die beiden Schenkel 13, 14 mit Bohrungen versehen, so daß das in Transportrichtung dahinterliegende Kettenglied mit dem in der Fig. 1 dargestellten verbunden werden kann. Der zylindrische Bolzen 15 ist mit einer Aussparung 17 versehen, so daß eine Rolle 18 drehbar auf den Verbindungsstift 16 aufgesetzt werden kann. Die Rolle 18 jedes Kettengliedes 10 kommt mit den nicht dargestellten Antriebskettenrädern der Transportkette in Eingriff. Dadurch werden Verhältnisse wie bei einer Rollenkette aus Stahl geschaffen. Die Platte 11, das Kopfteil 12 und die Schenkel 13, 14 des gabelförmigen Abschnittes bestehen aus Kunststoff. Zur Übertragung der Kräfte ist im dargestellten Ausführungsbeispiel jedes Kettenglied 10 mit einer Einlage 19 verstärkt, die im dargestellten Ausführungsbeispiel aus einem Stahlband oder einem faserverstärkten Kunststoff geformt ist, welches an den inneren, einander zugewandten Seiten der Schenkel 13, 14 anliegt und den Bolzen 15 umgreift. Das Band 19 ist mit lagegerechten Bohrungen versehen, um den jeweiligen Verbindungsstift 16 hindurchzuführen, wodurch auch das Band fixiert ist.

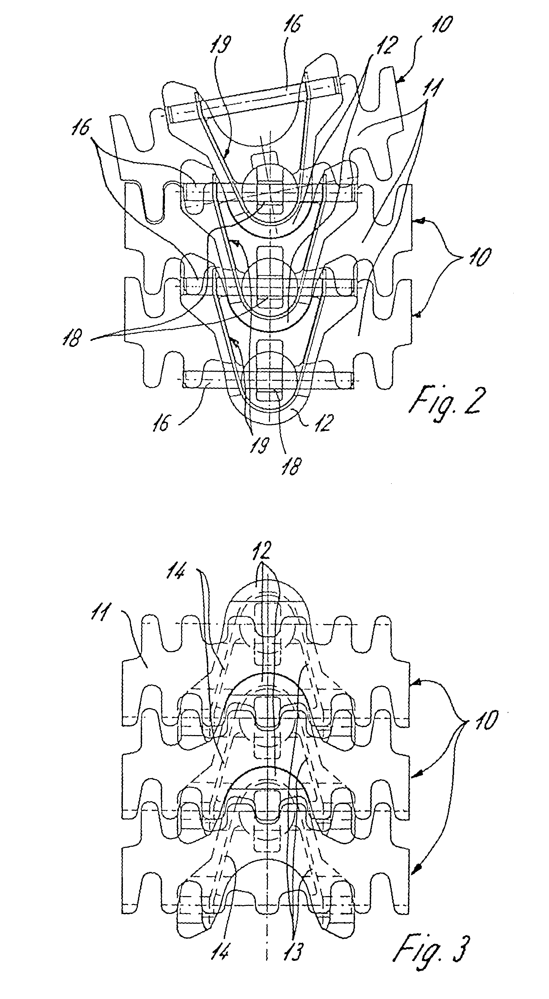

Die Fig. 2 zeigt die Beweglichkeit der Kettenglieder 10 in einer horizontalen Ebene. Dies erfolgt durch die Drehbeweglichkeit des zylindrischen Bolzens 15. Dazu kann jedes Kettenglied 10 gegenüber der geradlinigen Mittellängsachse eines Kettenstranges nach links und rechts um einen Winkel von beispielsweise 10 Grad gedreht werden. Die Kettenglieder 10 sind an den in Transportrichtung vorderen und hinteren Querkanten verzahnt, in der Weise, daß die Zähne der hinteren Querkante in die Zahnlücken der vorderen Querkante des nachfolgenden Kettengliedes eingreifen. Dadurch wird u. a. auch ein Spalt zwischen zwei Kettengliedern 10 vermieden, so daß in technisch funktioneller Hinsicht die aus den Kettengliedern 10 gebildete Auflagefläche als vollflächig anzusehen ist.

Das der Verstärkung dienende Band 19 kann aus Stahl oder einem faserverstärkten Kunststoff geformt werden. Vorzugsweise kommt ein kohlefaserverstärkter Kunststoff in Betracht. Die Rolle 18 kann aus Stahl oder auch aus einem Sintermetall gefertigt werden.

## Patentansprüche

1. Transportkette für eine Förderanlage, bei der jedes aus einem Kunststoff gefertigte Kettenglied (10) eine das Fördergut tragende Platte (11), ein mit einer zylindrischen Bohrung versehenes Kopfteil (12) und einen davon sich erstreckenden, gabelförmigen Abschnitt mit zwei Schenkeln (13, 14) aufweist, bei der zur kardangelenkigen Koppelung von zwei Kettengliedern (10) ein in die zylindrische Bohrung des Kopfteils (12) drehbar eingesetzter Bolzen (15) mit einer Querbohrung und die Schenkel (13, 14) des in Laufrichtung davorliegenden Kettengliedes mit dazu fluchtenden Bohrungen versehen sind, und daß in die Bohrungen der Kopfteile (12) und in die Bohrungen der Schenkel (13, 14) ein metallischer Verbindungsstift (15) eingesetzt ist, **dadurch gekennzeichnet, daß** der in die Bohrung des Kopfteils (12) eingesetzte Bolzen (15) eine Aussparung (17) aufweist, in der eine auf dem Verbindungsstift (16) drehbar gelagerte, mit den Zähnen eines Antriebsrades in Eingriff stehende, aus einem Werkstoff mit gegenüber dem Kunststoff des Kopfteils (12) höherer Festigkeit gefertigte Rolle (18) liegt, und/oder daß an den einander zugewandten Seiten der Schenkel (13, 14) des gabelförmigen Abschnittes eine Verstärkungseinlage (19) angeordnet ist.

2. Transportkette nach Anspruch 1, **dadurch gekennzeichnet, daß** die Verstärkungseinlage (19) aus einem V-förmig, der Kontur der Innenflächen der Schenkel (13, 14) des gabelförmigen Abschnittes entsprechend geformten Verstärkungsband besteht, welches mit Bohrungen zur Fixierung mittels des Verbindungsstiftes (16) versehen ist.

3. Transportkette nach Anspruch 2, **dadurch gekennzeichnet, daß** die Rolle (18) und die Verstärkungseinlage (19) aus Stahl gefertigt sind.

4. Transportkette nach Anspruch 1, **dadurch gekennzeichnet, daß** die Verstärkungseinlage (19) aus einem faserverstärkten, vorzugsweise kohlefaserverstärkten Kunststoff besteht.

5. Transportkette nach Anspruch 1, **dadurch gekennzeichnet, daß** die Rolle (18) aus einem Sintermetall besteht.

## Claims

1. A conveyor chain for a conveyor system wherein each chain link (10), made of plastic, comprises a plate (11) carrying the goods to be conveyed, a head part (12) formed with a cylindrical bore and a forked portion extending from the head part and having two legs (13, 14), wherein for the purpose of universal coupling of pairs of links (10), a bolt (15) rotatably inserted into the cylindrical bore of the head part (12) is formed with a transverse bore and the legs (13, 14) of the front link in the direction of motion are formed with bores aligned therewith and a metal connecting pin (6) is inserted into the bores in the head part (12) and into the bores in the legs (13, 14), characterised in that the bolt (15) inserted into the bore in the head part (12) has a recess (17) containing a roller (18) rotatably mounted on the connecting pin (16), in engagement with the teeth of a drive wheel, and made of a material having greater strength than the plastic head part (12), and/or a reinforcing insert (19) is disposed on the facing sides of the legs (13, 14) of the forked portion.

2. A conveyor chain according to claim 1,
characterised in that the reinforcing insert (19) comprises a V-shaped reinforcing strip adapted to the contour of the inner surfaces of the legs (13, 14) of the forked portion and formed with bores for fixing by means of the connecting pin (16).

3. A conveyor chain according to claim 2,
characterised in that the roller (18) and the reinforcing insert (19) are made of steel.

4. A conveyor chain according to claim 1,
characterised in that the reinforcing insert (19) is made of a fibre-reinforced, preferably carbon fibre-reinforced, plastic.

5. A conveyor chain according to claim 1,
characterised in that the roller (18) is of sintered metal.

## Revendications

1. Chaîne transporteuse pour une installation de convoyage, dans laquelle chaque maillon (10) réalisé en matière plastique comporte une plaque (11) portant la matière convoyée, une partie de tête (12) pourvue d'un perçage cylindrique, et une partie en forme de fourche, qui s'étend à partir de la partie de tête et comporte deux branches (13,14), et dans laquelle pour le couplage selon une articulation à la cardan de deux maillons (10) , un axe (15), qui est inséré de manière à pouvoir tourner dans le perçage cylindrique de la partie de tête (12), comprend un perçage transversal, et les branches (13,14) du maillon précédent, dans la direction de déplacement, sont pourvues de perçages alignés avec le perçage transversal, et dans laquelle une tige métallique de liaison (16) est insérée dans le perçage de la partie de tête (12) et dans les perçages des branches (13,14), caractérisée en ce que l'axe (15), qui est inséré dans le perçage de la partie de tête (12), comporte un évidement (17), dans lequel est disposé un galet (18) qui est monté de manière à pouvoir tourner sur la tige de liaison (16), engrène avec les dents d'une roue d'entraînement et est réalisé en une matière plastique possédant une solidité supérieure à la matière plastique de la partie de tête (12) et/ou qu'un insert de renfort (19) est disposé sur les côtés, qui se font face, des branches (13,14) de la partie en forme de fourche.

2. Chaîne transporteuse selon la revendication 1, caractérisée en ce que l'insert de renfort (19) est constitué par une bande de renfort en forme de V, qui correspond au contour des surfaces intérieures des branches (13,14) de la partie en forme de fourche et qui est pourvue de perçages pour la fixation à l'aide de la tige de liaison (16).

3. Chaîne transporteuse selon la revendication 2, caractérisée en ce que le galet (18) et l'insert de renfort (19) sont réalisés en acier.

4. Chaîne transporteuse selon la revendication 1, caractérisée en ce que l'insert de renfort (19) est réalisé en une matière plastique renforcée par des fibres et de préférence renforcée par des fibres de carbone.

5. Chaîne transporteuse selon la revendication 1, caractérisée en ce que le galet (18) est réalisé en un métal fritté.
